# DEMANDE DE BREVET EUROPEEN

(11) **EP 4 563 276 A1**
(43) Date de publication de la demande: **04.06.2025**
(21) Numéro de dépôt: 24215683.4
(22) Date de dépôt: 27.11.2024
(51) Int. Cl.: B23K 20/12, B23K 20/233, B23K 101/04, B23K 101/36, B23K 103/10

(54) **OUTIL DE SOUDAGE PAR FRICTION-MALAXAGE COMPRENANT UN ÉPAULEMENT AMÉLIORÉ**

(30) Priorité: 27.11.2023 FR 2313131
(71) Demandeur: Institut Maupertuis, 35170 Bruz (FR)
(72) Inventeur: GUILLO, Mario, 35136 ST-JACQUES DE LA LANDE (FR)
(74) Mandataire: Regimbeau

(57) **Abrégé**

Le présent exposé concerne un outil (1) de soudage par friction-malaxage, l'outil (1) comprenant :
- un pion externe tournant (2) ; et
- un corps (5) présentant un épaulement entourant le pion (2),

l'épaulement (3) comprenant au moins une face (30) configurée pour être en contact avec des pièces (21, 22) à souder,
une moyenne arithmétique de rugosité de la face (30) étant inférieure ou égale à 0,8.

## Description

### DOMAINE TECHNIQUE

Le présent exposé concerne le soudage par friction-malaxage.

### ETAT DE LA TECHNIQUE

Le soudage par friction-malaxage (connu sous l'acronyme anglosaxon « *FSW* » pour *Friction Stir Welding*) est employé depuis plusieurs années pour souder des pièces mécaniques. La soudure, résultant du soudage FSW, est créée par l'intermédiaire d'un outil de soudage comprenant un pion et un épaulement, tournant ou statique selon les configurations de soudage (matériaux, épaisseurs, cadence requise) et la qualité de soudure souhaitée, qui comprend au moins une face configurée pour être en contact avec les pièces. Le pion est mobile en rotation autour de son axe de révolution à une vitesse de rotation donnée et pénètre dans les pièces à souder. Quant à la face de l'épaulement, elle est mise en contact avec les pièces à souder. Une fois que le pion a pénétré dans les pièces et que la face de l'épaulement est en contact avec les pièces, l'outil est animé d'un mouvement d'avance selon une direction donnée de l'espace afin de parcourir une ligne de joint définie préalablement. Ce procédé est notamment avantageux pour un alliage à bas point de fusion, par exemple un alliage d'aluminium, car il ne provoque pas sa fusion. On contourne ainsi des problématiques de porosités et de fissuration à chaud, inhérentes au soudage par fusion des alliages, notamment des alliages d'aluminium.

Or, l'épaulement en contact avec les pièces à souder provoque des fissures en surface de la soudure lors de son passage. Dès lors, des morceaux des pièces, typiquement en alliage d'aluminium, collent sur une partie, voire sur toute la face. La soudure présente alors une fragilité qui compromet sa qualité. Une autre conséquence de ces fissures est l'apparition d'un effort de trainée important, orienté dans un sens opposé au mouvement d'avance de l'outil sur la pièce, qui fragilise l'outil jusqu'à provoquer une rupture prématurée du pion dans certains cas.

### EXPOSE GENERAL

Un but du présent exposé est donc d'améliorer le soudage par friction-malaxage.

À cet effet, selon un premier aspect du présent exposé, il est proposé un outil de soudage par friction-malaxage,
l'outil comprenant :
   - un pion externe tournant ; et
   - un corps présentant un épaulement entourant le pion,
l'épaulement comprenant au moins une face configurée pour être en contact avec des pièces à souder,
une moyenne arithmétique de rugosité de la face étant inférieure ou égale à 0,8.

Dans la présente demande, on entend par « moyenne arithmétique de rugosité » un indice calculé par un écart moyen entre des pics et des creux s'étendant le long d'une ligne moyenne de la face. L'indice s'exprime généralement en micromètres et porte le diminutif Ra. La moyenne arithmétique de rugosité telle que définie dans la présente demande s'oppose donc à une autre définition de la moyenne arithmétique de rugosité (dont son diminutif est nommé Sa) dans laquelle l'indice est calculé par un écart moyen entre des pics et des creux s'étendant sur une surface moyenne de la face au lieu d'être mesurés le long d'une ligne moyenne de la face.

Les propriétés tribologiques de la face sont alors améliorées.

Ainsi, réduire la moyenne arithmétique de rugosité de la face a pour effet de réduire le coefficient de friction et ainsi de mieux faire glisser l'épaulement sur les pièces à souder, notamment lorsque l'épaulement est statique par rapport au pion. Il s'ensuit une diminution de l'effort de traînée grâce à l'amélioration des propriétés tribologiques de la face. La qualité de la soudure est donc améliorée. La réduction de l'effort de traînée permet en outre d'améliorer la durée de vie de l'outil de soudage qui est moins sollicité, de souder avec un effort de forge réduit et ce, plus rapidement, en améliorant par conséquent la qualité et la cadence du soudage.

Il peut être prévu que la moyenne arithmétique de rugosité est inférieure ou égale à 0,4 ou à 0,2, voire à 0,1, par exemple à 0,05, voire à 0,50, voire à 0,10.

Il peut être prévu que la moyenne arithmétique de rugosité est inférieure ou égale à 0,01.

Il peut être prévu que la face porte une couche de revêtement présentant un coefficient de friction inférieur ou égal à 0,8.

Il peut être prévu que la face porte une couche de revêtement présentant une dureté supérieure ou égale à 1000 HV.

Il peut être prévu que la face de l'épaulement soit une face d'extrémité plane.

Il peut être prévu que la face de l'épaulement soit une face d'extrémité de forme incurvée ou rayonnée.

Il peut être prévu qu'une tenue maximale en température de la couche de revêtement est supérieure ou égale à 200°C.

Il peut être prévu que la couche de revêtement possède des propriétés anti-collage ou antistatique de l'aluminium.

Il peut être prévu que la couche de revêtement est en carbone adamantin.

Il peut être prévu que la face est nitrurée.

Il peut être prévu que l'épaulement est statique et le pion est monté mobile en rotation par rapport à l'épaulement.

Il peut être prévu qu'un rapport entre un diamètre de la face et un diamètre du pion est inférieur ou égal à 1,5.

Il peut être prévu que l'outil comprend en outre des moyens de lubrification de la face.

Il peut être prévu que l'épaulement présente plusieurs faces non coplanaires présentant chacune une moyenne arithmétique de rugosité inférieure ou égale à 0,8, par exemple inférieure ou égale à 0,4 ou à 0,2, voire à 0,1, par exemple à 0,05, voire à 0,50, voire à 0,10.

Il peut être prévu que l'épaulement présente plusieurs faces non coplanaires présentant chacune une moyenne arithmétique de rugosité inférieure ou égale à 0,01.

Selon un deuxième aspect du présent exposé, il est proposé un procédé de traitement d'un épaulement d'un outil de soudage par friction-malaxage,
l'épaulement comprenant au moins une face configurée pour être en contact avec des pièces à souder,
le procédé comprenant une rectification de la face.

Il peut être prévu que la rectification est mise en oeuvre de sorte qu'une moyenne arithmétique de rugosité de la face est inférieure ou égale à 0,8, de préférence inférieure ou égale à 0,01.

Il peut être prévu que la rectification est mise en oeuvre de sorte que la moyenne arithmétique de rugosité de la face est inférieure ou égale à 0,4 ou à 0,2, voire à 0,1, par exemple à 0,05 voire à 0,50, voire à 0,10.

Il peut être prévu que le procédé comprend en outre une étape de revêtement de la face après la rectification.

Il peut être prévu que le procédé comprend en outre une étape de nitruration de la face avant le revêtement.

Selon un troisième aspect du présent exposé, il est proposé un procédé de soudage de pièces, le procédé étant mis en oeuvre par un outil conforme au premier aspect.

Il peut être prévu que le procédé de soudage est appliqué à des pièces juxtaposées champ contre champ.

Il peut être prévu que le procédé de soudage est appliqué à des pièces superposées l'une sur l'autre.

Selon un quatrième aspect, il est prévu un procédé de soudage d'une première pièce et d'une deuxième pièce,
le procédé étant mis en oeuvre par un outil conforme au premier aspect, l'épaulement présentant plusieurs faces non coplanaires présentant chacune une moyenne arithmétique de rugosité inférieure ou égale à 0,8 par exemple inférieure ou égale à 0,4 ou à 0,2, voire à 0,1, par exemple à 0,05, voire à 0,50, voire à 0,10 ou présentant plusieurs faces non coplanaires présentant chacune une moyenne arithmétique de rugosité inférieure ou égale à 0,01,
et de sorte que :
   - une première des faces et une deuxième des faces de l'épaulement sont en contact avec la première pièce ; et
   - une troisième des faces de l'épaulement est en contact avec la deuxième pièce,
les première et deuxième pièces étant inclinées l'une par rapport à l'autre, en étant par exemple perpendiculaires l'une à l'autre.

Selon un cinquième aspect, il est prévu un ensemble comprenant des pièces soudées résultant de la mise en oeuvre d'un procédé selon le troisième aspect ou le quatrième aspect.

Selon un sixième aspect, il est prévu un bac de batteries comprenant au moins une peau et au moins un profilé creux,
une soudure de la peau au profilé résultant d'une mise en oeuvre d'un procédé selon le troisième aspect ou le quatrième aspect.

Selon un septième aspect, il est prévu un aéronef comprenant une peau de fuselage et au moins un raidisseur,
une soudure du raidisseur à la peau de fuselage résultant d'une mise en oeuvre d'un procédé selon le quatrième aspect.

À des fins de concision, la moyenne arithmétique de rugosité sera nommée indice de rugosité dans la suite de la description.

### DESCRIPTION DES FIGURES

D'autres caractéristiques, buts et avantages ressortiront de la description qui suit, qui est purement illustrative et non limitative, et qui doit être lue en regard des dessins annexés sur lesquels :
la figure 1 illustre schématiquement une électrobroche de soudage par friction-malaxage montée sur un robot ;
la figure 2 est une vue schématique en élévation d'un outil de friction-malaxage monté sur une électrobroche de soudage par friction-malaxage ;
la figure 3a et la figure 3b sont des vues schématiques en perspective d'outils de friction-malaxage avec un épaulement statique ;
la figure 4a et la figure 4b illustrent schématiquement des outils de friction-malaxage ;
la figure 5a, la figure 5b et la figure 5c sont des photographies de soudures présentant des défauts et réalisées par friction-malaxage;
la figure 6 est une photographie rapprochée d'une soudure présentant des manquements de matière en surface et réalisée par friction-malaxage;
la figure 7a et la figure 7b sont des photographies d'une soudure présentant des fissures en surface et réalisée par friction-malaxage;
la figure 7c est une courbe de l'effort de trainée subi par l'outil lors d'une soudure réalisée par friction-malaxage avec un épaulement ne présentant pas d'amélioration des propriétés tribologiques de la face ;
la figure 8 est une photographie d'une soudure ne présentant pas de défauts de surface et réalisée par friction-malaxage ;
la figure 9 est un graphe illustrant une évolution d'un effort de traînée en fonction du temps lors d'une soudure par friction-malaxage avec un épaulement présentant une amélioration des propriétés tribologiques de la face ;
la figure 10a est une photographie d'une face d'un épaulement présentant des morceaux de soudure collés ;
la figure 10b est une photographie d'une face d'un épaulement n'ayant réalisé aucune soudure (neuf) ;
la figure 10c est une photographie d'une face d'un épaulement sans collage d'aluminium grâce à l'amélioration des propriétés tribologiques de la face ;
la figure 11 est un organigramme illustrant un mode de mise en oeuvre d'un procédé de traitement d'une face d'un épaulement ;
la figure 12 est un organigramme illustrant un mode de mise en oeuvre d'un procédé de soudage de pièces par friction-malaxage ;
la figure 13a, la figure 13b, la figure 13c, la figure 13d et la figure 13e illustrent schématiquement plusieurs modes de réalisation d'un soudage par friction-malaxage ;
la figure 14 illustre un effort de trainée avec et sans lubrification de la face d'un épaulement ; et
la figure 15 est une photographie de pièces soudées par friction-malaxage ;
la figure 16a est une micrographie de pièces soudées par friction-malaxage, les pièces étant des alliage d'aluminium de série 6000 de 2 mm d'épaisseur ;
la figure 16b est une micrographie de pièces soudées par friction-malaxage, les pièces étant des alliage d'aluminium de série 2000 de 2 mm d'épaisseur ;
la figure 17 illustre schématiquement une partie d'un aéronef ;
la figure 18a, la figure 18b et la figure 18c illustrent schématiquement plusieurs modes de réalisation d'un soudage de pièces d'un aéronef par friction-malaxage ;
la figure 19 illustre schématiquement une configuration de soudage d'une peau en aluminium sur un profilé en aluminium creux typique d'un bac de batteries de véhicule électrique ; et
la figure 20a et la figure 20b sont des photographies d'une soudure d'un bac de batteries obtenue par friction-malaxage.

### DESCRIPTION DETAILLEE

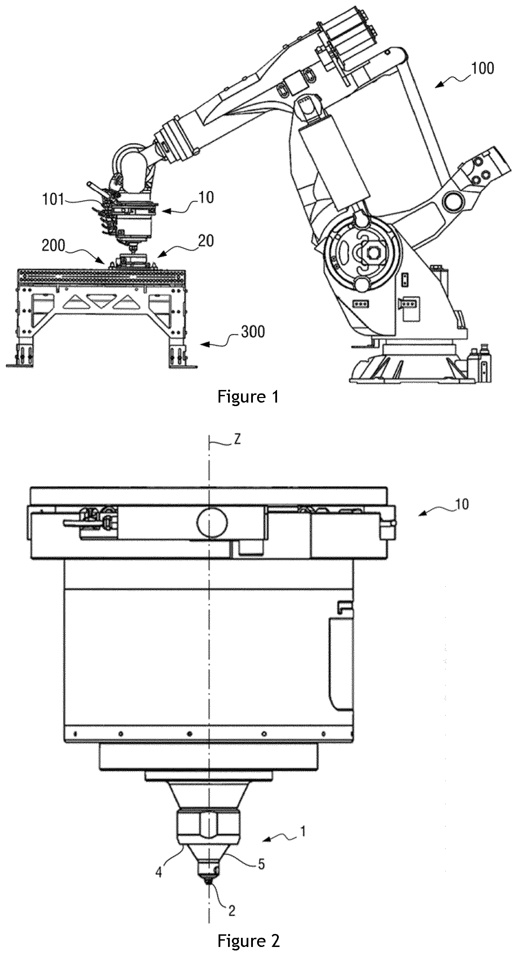

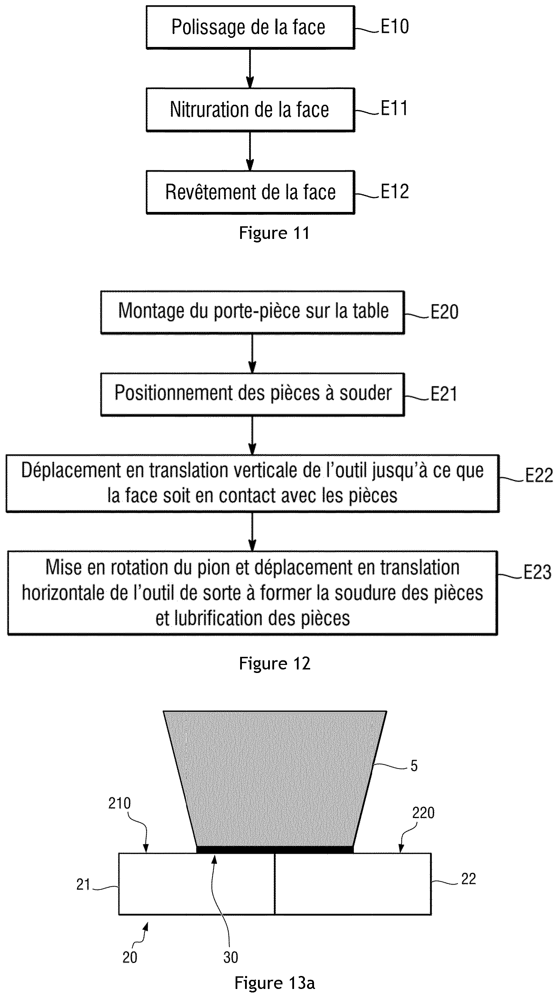

On a illustré à titre d'exemple en figure 1 un robot industriel 100 destiné à se déplacer dans un espace de travail pour souder des pièces 21, 22 d'un ensemble 20. L'ensemble 20 est par ailleurs illustré à titre d'exemple à la figure 13a. Le robot comprend au moins un bras monté sur au moins un axe. Dans la présente demande, chaque axe correspond à un degré de liberté du robot. Dans l'exemple de réalisation illustré en figure 1, le robot 100 comprend six axes. Le robot comprend en outre une extrémité libre 101 configurée pour recevoir une broche, de préférence une électrobroche 10 pour réaliser l'opération de soudage. Bien entendu l'électrobroche 10 peut être montée sur un autre dispositif, par exemple une machine-outil, pour réaliser le soudage.

Les pièces 21, 22 sont montées dans un outillage 200 fixé à une table 300. Selon un exemple de réalisation, notamment illustré en figure 1, l'outillage 200 est mis et maintenu en position sur la table 300, typiquement par des vis le rendant solidaire à la table 300. L'outillage 200 comprend en outre des moyens de serrage des pièces 21, 22. Selon un exemple de réalisation, l'outillage 200 comprend des brides de serrage configurés pour maintenir immobiles les pièces 21, 22 durant l'opération de soudage friction-malaxage.

Dans le présent exposé, le soudage est mis en oeuvre par friction-malaxage. Pour ce faire, l'électrobroche 10 comprend un outil 1 de friction-malaxage, illustré notamment à la figure 2, monté sur une extrémité libre 4 de l'électrobroche 10. L'électrobroche 10 est connue d'une personne du métier et ne sera donc pas détaillée d'avantage. On pourra se référer au document FR-3 122 110 qui décrit un exemple d'électrobroche 10.

L'outil 1 de friction-malaxage comprend un pion 2 tournant, c'est-à-dire monté mobile en rotation autour d'un axe longitudinal Z de l'électrobroche.

On convient ici qu'une direction axiale correspond à une direction colinéaire à l'axe longitudinal Z et qu'une direction radiale est une direction orthogonale à cet axe et coupant ce dernier. Par ailleurs, un plan axial est un plan défini le long de l'axe longitudinal Z et un plan transversal est un plan perpendiculaire à l'axe longitudinal Z. Un plan oblique est un plan incliné par rapport au plan axial ou au plan radial.

L'outil 1 de friction-malaxage comprend en outre un corps 5 distinct du pion 2. Le corps 5 peut être monté fixe par rapport au pion 2. Le corps 5 comprend une base 6 et un épaulement 3. La base 6 est montée sur l'électrobroche 10 et l'épaulement 3 est configuré pour être en contact avec les pièces 21, 22 lors du soudage. Le corps 5 est délimité axialement depuis la base 6 jusqu'à l'épaulement 3 et radialement par une face latérale 7 s'étendant autour de l'axe longitudinal Z. L'épaulement 3 entoure le pion 2 et présente un diamètre D2 supérieur à un diamètre D1 du pion 2. Ainsi, l'épaulement forme une variation de section transversale entre le corps 5 et le pion 2.

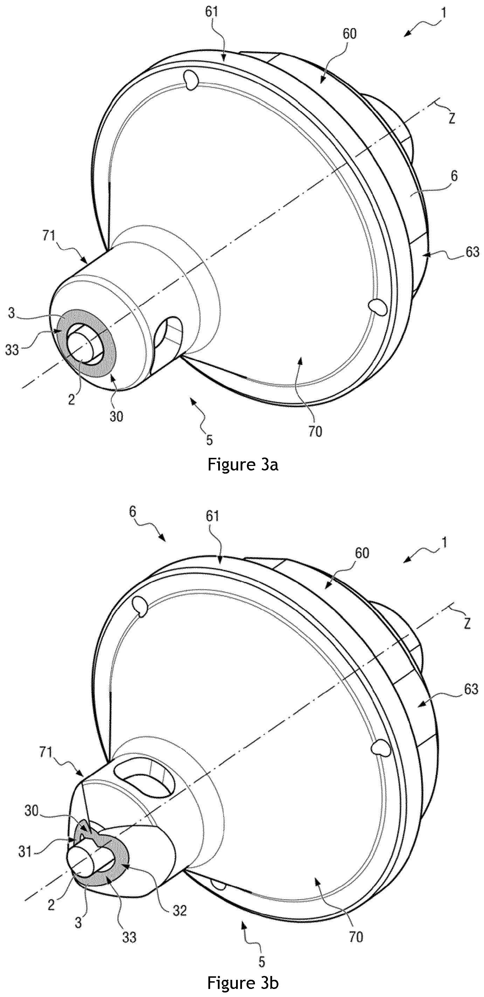

Selon un exemple de réalisation du corps 5, notamment illustré aux figures 3a et 3b, la base 6 du corps 5 présente une première section cylindrique 60 et une deuxième section cylindrique 61 présentant un diamètre supérieur au diamètre de la première section cylindrique 60. La première section cylindrique 60 comprend des méplats 63 configurés pour bloquer en rotation le corps 5 dans l'électrobroche 10. Ainsi, lors d'un montage du corps 5 sur l'électrobroche 10, le corps 5 est mis en position avec l'électrobroche 10 par un centrage sur la première section 60 et un appui plan sur la deuxième section 61. Le corps 5 est maintenu en position par un moyen de serrage permettant de rendre solidaire le corps 5 avec l'électrobroche 10.

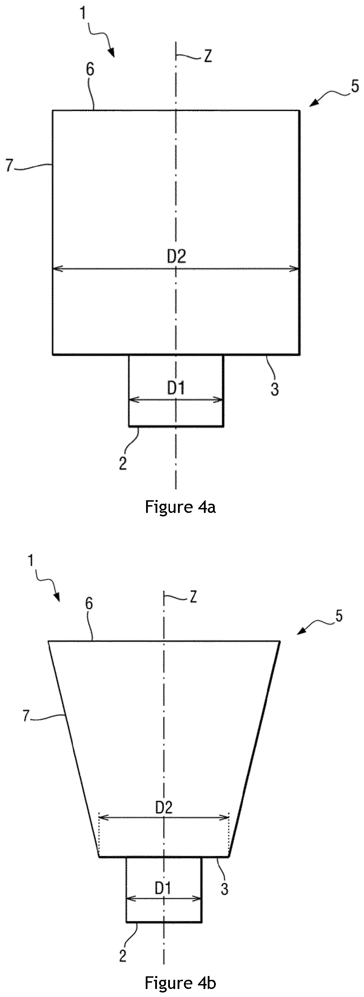

Selon un exemple de réalisation de la face latérale 7, notamment illustré en figure 4a, la face latérale 7 est cylindrique. Elle présente un diamètre D2 constant le long de l'axe longitudinal Z, mesuré perpendiculairement à l'axe longitudinal Z. En variante, la face latérale 7 peut être non cylindrique. Elle est par exemple tronconique comme illustré à titre d'exemple en figure 4b. Elle présente un diamètre D2 mesuré perpendiculairement à l'axe qui est non constant et qui, en l'espèce, diminue à mesure qu'on se déplace en direction du pion. La face latérale 7 peut également être non cylindrique sur une première portion 70 et cylindrique sur une deuxième portion 71. Elle est par exemple tronconique sur la première portion 70 comme illustré à titre d'exemple en figure 3a et en figure 3b.

Le pion 2 peut être monté mobile par rapport à l'épaulement 3 qui est alors dit fixe, par exemple en assemblant l'épaulement 3 à une embase de l'électrobroche 10. Ainsi, l'outil 1 est plus robuste grâce à l'épaulement fixe 3. De plus, la soudure 23 présente une meilleure qualité de surface. Elle est donc plus résistante. En outre, l'outil 1 soude plus rapidement. Une cadence de l'outil 1 est donc améliorée. En variante, le pion 2 peut être monté en étant fixé rigidement à l'épaulement 3 par exemple en assemblant le pion 2 et l'épaulement 3 à un même axe de rotation de l'électrobroche 10.

L'épaulement 3 présente au moins une face d'extrémité axiale 30 de forme générale plane et configurée pour être en contact avec la surface des pièces 21, 22 à souder.

La face d'extrémité axiale 30 peut présenter une autre forme. Par exemple, une jonction entre la face d'extrémité axiale 30 et la face latérale peut être arrondie ou chanfreinée. La face 30 peut avoir une forme concave.

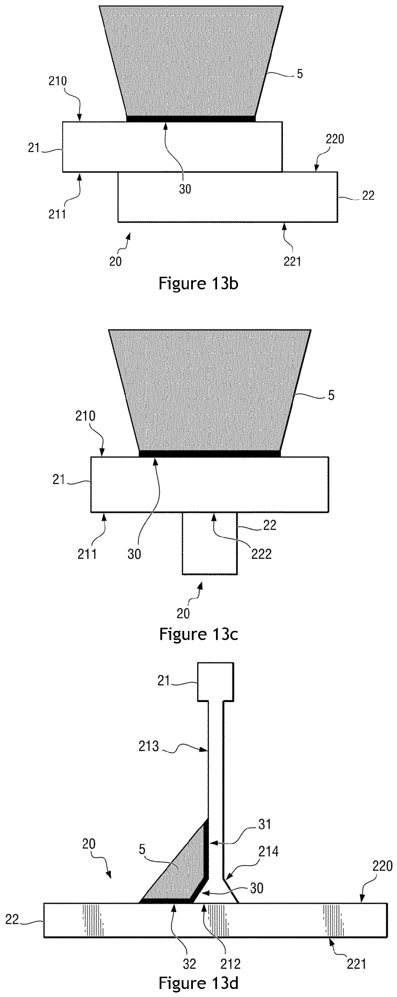

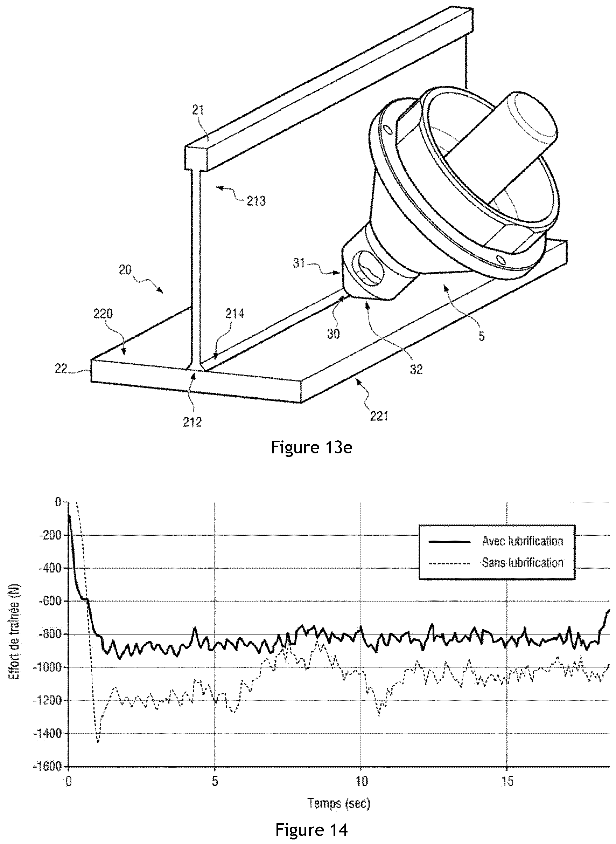

Grâce à l'épaulement fixe, on peut particulièrement bien adapter la forme de l'épaulement à la forme et à la configuration des pièces que l'on doit souder. Cet épaulement constitue alors une « contreforme » du plan de joint et contient la matière en cours de soudage (voir par exemple à ce sujet le mode de réalisation des figures 13d et 13e décrit plus loin.) Pour chaque configuration de soudage particulière, il est possible d'adapter la forme de l'épaulement à celle du joint que l'on veut réaliser.

Le dispositif portant l'outil 1, par exemple le robot précité, est configuré pour déplacer l'outil en translation verticale, afin de mettre en contact la face d'extrémité axiale 30, typiquement plane, avec une portion des pièces 21, 22, et en translation horizontale, afin de faire progresser l'outil le long des pièces à souder. Ainsi, lors du soudage, notamment lorsque l'épaulement est fixe, la face 30 glisse sur la portion des pièces 21, 22 et en même temps, le pion 2 animé d'un mouvement de rotation autour de l'axe longitudinal chauffe et malaxe le plan de joint, pour créer une soudure 23 des pièces 21, 22. La face 30 permet alors de contenir la matière durant l'opération de soudage.

L'épaulement 3 peut comprendre en outre plusieurs faces d'extrémité axiale, notamment planes, non coplanaires 30, 31, 32. Ainsi, il est possible de réaliser la soudure 23 entre des pièces s'étendant angulairement, par exemple perpendiculairement ou en présentant un angle inférieur à 90°, tel que 70°, l'une par rapport à l'autre.

Selon un exemple de réalisation, notamment illustré en figure 3b, la face 3 est décomposée en une première face d'extrémité axiale 30 s'étend dans un plan d'extrémité transversal et deux autres faces planes 31, 32 s'étendent symétriquement l'une de l'autre par rapport au plan de symétrie axial donnant lieu à deux plans obliques distincts depuis la face 30. En variante, les deux autres faces planes 31, 32 s'étendent asymétriquement l'une de l'autre par rapport au plan de symétrie axial pour souder des pièces ne s'étendant pas perpendiculairement mais en présentant un angle inférieur à 90°, par exemple 70°.

L'amélioration des propriétés tribologiques par le contact de la face 30 avec la surface des pièces 21, 22 permet d'améliorer la soudure 23. Afin d'améliorer les propriétés tribologiques, un indice de rugosité de la face 30 est inférieur ou égal à 0,8, par exemple inférieur ou égal à 0,4. Ainsi, la face 30 ne présente aucune strie d'usinage, notamment en forme de bossage, susceptibles d'adhérer aux pièces 21, 22 en contact avec la face 30 lors de la réalisation du soudage. Dès lors, le coefficient de friction de la face 30 avec les pièces 21, 22 est amélioré.

On distingue trois configurations de soudage afin de montrer la pertinence de l'amélioration des propriétés tribologiques de la face 30.

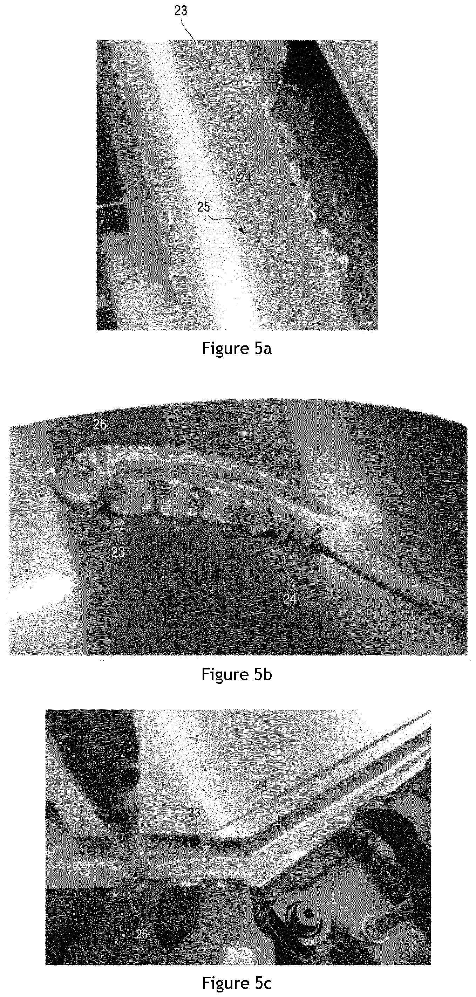

Dans un premier exemple de configuration, le corps 5, en particulier l'épaulement 3 du corps 5, est animé d'un mouvement de rotation autour de l'axe longitudinal Z et ne glisse pas sur les pièces 21, 22. Dans cet exemple, le pion 2 est généralement solidaire du corps 5 et est animé du même mouvement de rotation. Les figures 5a, 5b et 5c illustrent des exemples de défauts rencontrés dans cette configuration, Notamment des bourrelets 24, plus communément appelés « flash de soudure » en raison du relief formé par les morceaux de matière projetés qui s'agglomèrent en périphérie de la soudure lors de la rotation de l'épaulement 3, et des stries de soudage 25. Or, ces défauts réduisent les propriétés mécaniques de l'assemblage des pièces 21, 22 et forment également des points d'amorce de corrosion des pièces 21, 22. En outre, la soudure 23 est irrégulière. En effet, comme illustré dans l'exemple en figure 5a, la figure présente de nombreux reliefs au sein de la soudure 23 à cause des stries de soudage 25 et en périphérie de la soudure 23 à cause des flash de soudure 24. Dès lors, la soudure 23 présente une moins bonne qualité mécanique et résiste moins aux phénomènes de corrosion. Pour limiter les flash de soudure 24 et les stries de soudage 25, une étape de finition est nécessaire après le soudage, par exemple un usinage, un brossage ou meulage. Or, à cause de l'étape de finition, le soudage est plus long et la réalisation du produit est plus coûteuse. Le mouvement rotatif de l'épaulement 3 sur les pièces 21, 22 peut en outre créer un échauffement suffisamment important pour réduire la raideur des pièces 21, 22 au point qu'elle ne puisse plus supporter un effort de forge appliqué par l'outil de soudage 1 sur les pièces 21, 22 selon l'axe longitudinal Z. L'outil 1 pénètre alors profondément dans les pièces 21, 22 et provoque des flash de soudure encore plus prononcés 24 (figure 5b), voire un effondrement de soudure 26, plus communément appelé « crash de soudure » (figure 5c). Les pièces 21, 22 sont alors mises au rebut.

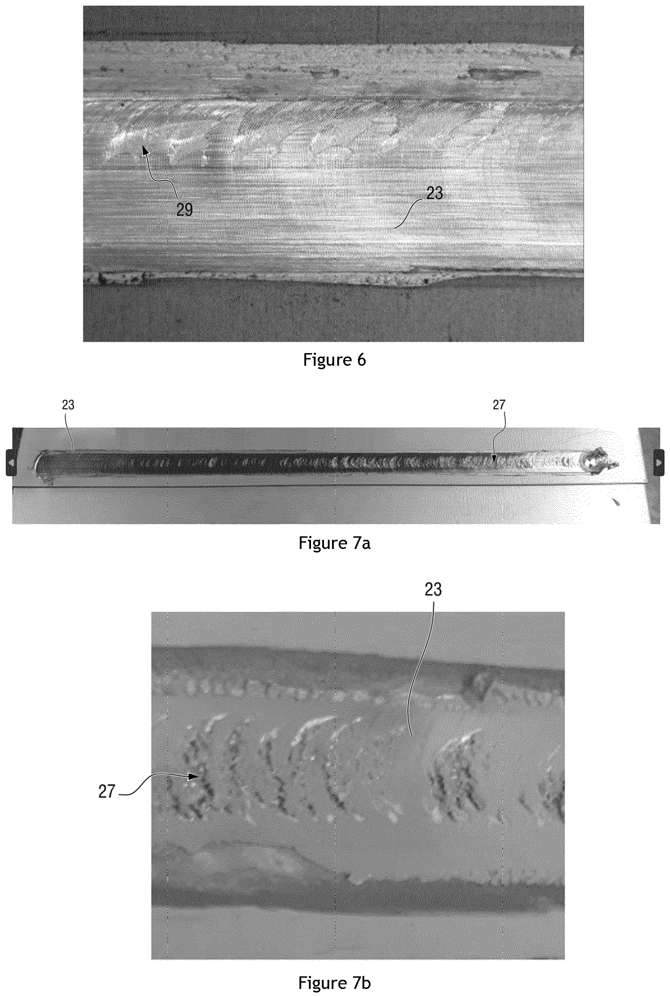

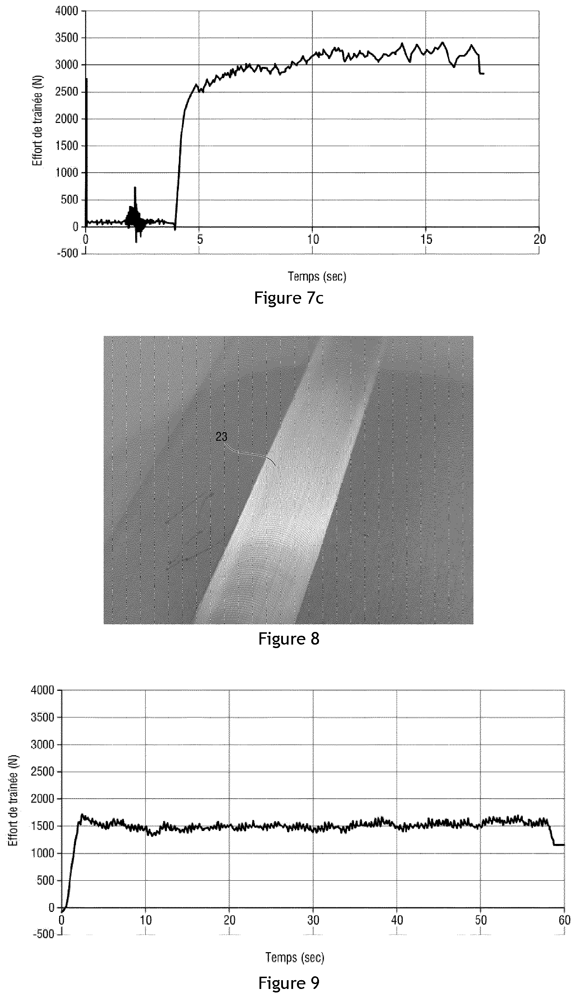

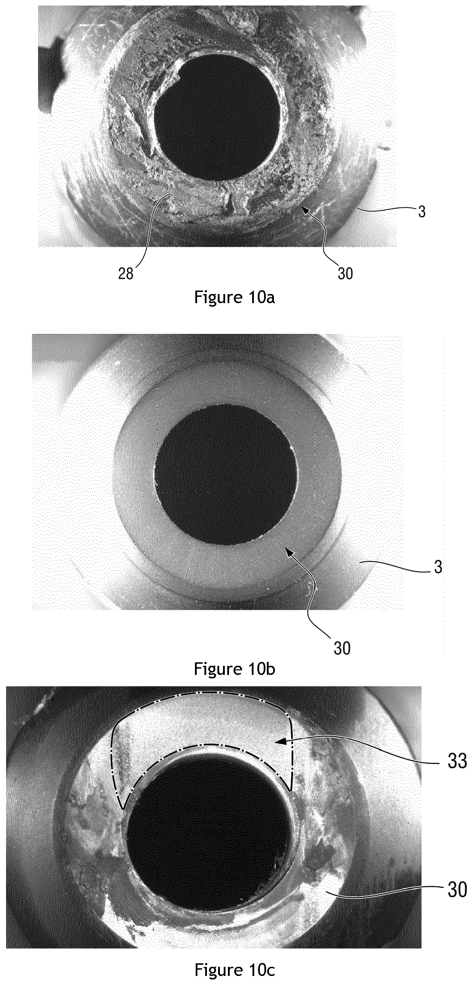

Dans un deuxième exemple de configuration, le pion 2 est animé d'un mouvement de rotation selon l'axe longitudinal Z par rapport au corps 5, en particulier par rapport à l'épaulement 3 qui est fixe dans cet exemple. On rappelle ici que lorsque l'épaulement 3 est fixe, la face d'extrémité axiale 30 glisse en translation sur les pièces 21, 22 à souder. Toujours dans cette seconde configuration, la face 30 est dépourvue de toute amélioration des propriétés tribologiques de la face 30 énoncées préalablement. Or, la soudure 23 est toujours irrégulière. En effet, elle présente des manquements de matière en surface 29 (figure 6) et des morceaux 28 des pièces 21, 22, typiquement en alliage d'aluminium, colmatent la face 30 (figure 10a). Des fissures 27 peuvent même apparaitre (figures 7a et 7b). La soudure est alors de qualité médiocre et non acceptable industriellement. On a illustré sur le graphe en figure 7c une évolution d'un effort de trainée subi par l'outil 1 pouvant être exprimé en Newton au cours du temps pouvant être exprimé en secondes. Sur ce graphe, on constate que l'effort de traînée peut atteindre jusqu'à 3500 N. Or, une telle valeur de l'effort de trainée est une conséquence d'un mauvais glissement de la face 30 du corps 5 sur la surface des pièces 21, 22 à l'origine des défauts précités. En effet, l'effort de traînée s'opposant au mouvement d'avance de l'outil 1, sa valeur augmente lorsque la face 30 n'est pas suffisamment lisse, et donc qu'elle présente un coefficient de rugosité élevé, et/ou lorsqu'elle est colmatée. Une solution consiste à réduire la vitesse d'avance et/ou de rotation de l'outil 1 afin de limiter le colmatage. Mais les faibles vitesses d'avance et/ou de rotation sont incompatibles avec une fabrication à l'échelle industrielle et dégradent fortement les propriétés mécaniques des pièces 21, 22 et de la soudure.

Ainsi, selon un troisième exemple de configuration, dans laquelle l'épaulement 3 est fixe et le pion 2 est mobile, un coefficient de rugosité de la face 30 est inférieur ou égal à 0,8. La face 30 présente donc ici une amélioration tribologique. Contrairement aux précédents exemples de configuration, la soudure 23 présente une meilleure qualité de surface comme illustrée par exemple à la figure 8. La soudure respecte les critères de qualité nécessaires au niveau industriel avec une finition de haute performance. En effet, la soudure 23 de la figure 8 ne présente ni flash de soudure 24, ni stries de soudage 25, ni fissures 27. La soudure 23 obtenue est donc d'apparence lisse et nette. En outre, la réduction du coefficient de friction entre la face 30 et la surface des pièces 21, 22 permet de souder plus rapidement grâce à un coefficient de friction réduit. On a illustré l'effort de trainée à la figure 9 sous la forme d'un graphe montrant à titre d'exemple un essai de soudure des pièces 21, 22 et dans lequel est représenté en ordonnée l'effort de traînée pouvant être exprimé en Newton et en abscisse une durée pouvant être exprimée en secondes. L'effort de traînée est réduit à 1500 N, soit un gain de 65% par rapport à la seconde configuration. Il est également beaucoup plus lisse, provoquant moins de contraintes sur l'outil 1. En effet, toujours selon ce graphe, une évolution de l'effort de traînée 90 est centrée sur une valeur moyenne de l'effort de traînée 91 au cours de la soudure. En l'espèce, l'effort de traînée varie peu autour de la valeur moyenne 91, typiquement moins de 5% et forme généralement un plateau. Ainsi, les propriétés tribologiques de la face 30 améliorent bien le glissement comme en témoigne l'effort de traînée considérablement réduit. Par conséquent, la durée de vie et la cadence de l'outil 1 sont améliorées. Une étape de finition, par exemple un usinage, un meulage ou un brossage n'est plus nécessaire.

Bien entendu, l'amélioration tribologique 30 peut être également avantageuse dans une configuration à épaulement tournant.

L'indice de rugosité de la face 30 peut en outre être inférieur ou égal à 0,01 de sorte que les avantages précités sont encore accentués. On parle alors de surface poli-miroir car l'indice de rugosité est extrêmement faible.

Dans le cas où la face 3 comprend plusieurs faces, notamment plusieurs faces non coplanaires 30, 31, 32, toutes les faces ou certaines faces peuvent présenter un indice de rugosité inférieur ou égale à 0,8, inférieur ou égal à 0,4 ou inférieur ou égal à 0,01. Une seule face peut également présenter un indice de rugosité inférieur ou égale à 0,8, inférieur ou égal à 0,4, ou inférieur ou égal à 0,01. De la même manière, chaque face peut comporter ou non, ou de manière indépendante un revêtement 33 possédant les propriétés précités.

Une mesure de l'indice de rugosité peut être mise en oeuvre par des moyens connus d'une personne du métier, typiquement un rugosimètre, et ne seront donc pas détaillés davantage dans le présent exposé.

La face 30 peut porter une couche 33 de revêtement présentant un coefficient de friction inférieur ou égal à 0,8. Ainsi, les propriétés tribologiques de la face sont encore davantage améliorées par la réduction du coefficient de friction. En effet, la couche 33 réduit l'effort de traînée et améliore donc le glissement. En outre, un frottement de la face 30 sur les pièces 21, 22 est réduit jusqu'à 65% par rapport à une face d'extrémité plane 30 présentant un indice de rugosité supérieur à 0,8 et dépourvue de la couche 33. En outre, la face 30 présentant un coefficient de rugosité inférieur ou égal à 0,8 améliore l'adhésion de la couche 33 sur la face 30, donc sa durée de vie, et encore davantage lorsqu'elle présente un coefficient de rugosité inférieur ou égal à 0,01.

Une dureté de la couche 33 peut être supérieure ou égale à 1000 HV, de préférence supérieure ou égale à 4 000 HV afin d'améliorer la résistance à l'abrasion. Avoir un indice de rugosité bas de la face 30 permet d'améliorer l'adhésion de la couche 33 sur la face 30 et la durée de vie de la couche 33.

Une mesure de la dureté exprimée en HV, appelée dureté Vickers, peut être mise en oeuvre de façon connue par une personne du métier, typiquement au moyen d'une mesure optique d'une trace laissée par un pénétrateur normalisé en diamant de forme pyramidale, et ne sera pas détaillée davantage dans le présent exposé.

Une tenue maximale en température de la couche 33 est supérieure ou égale à 200°C, de préférence supérieure ou égale 1100°C. Ainsi, une tenue en température de la couche 33 lors du soudage est améliorée et la durée de vie de l'outil 1 est augmentée.

Afin d'améliorer l'adhérence de la couche 33 avec la face 30, la face 30 peut être nitrurée par un traitement de nitruration (détaillé plus bas dans le présent exposé) avant application de la couche 33 sur la face 30. Ainsi, une durée de vie de la couche 33 est encore améliorée.

Selon un exemple de réalisation de la couche 33, la couche 33 est en carbone adamantin (mieux connu sous l'acronyme anglosaxon « DLC » pour *diamond-like-carbon*)*.* Les DLC couvrent différents composés de carbones amorphes selon leurs liaisons prédominantes, à savoir des liaisons trigonales sp2 ou tétraédriques sp3 et leur teneur en hydrogène. Dans la présente demande, « carbones amorphes » signifie que les atomes de carbone du composé ne forment pas une structure cristalline. Le DLC peut être un composé de carbones amorphes hydrogénés (connu sous l'acronyme « a-C:H »), c'est-à-dire un composé de carbones amorphes ayant subi une réaction chimique par addition de molécules de dihydrogène gazeux et présentant un nombre de liaisons sp3 entre 40 % et 60 % d'un nombre de liaisons totales du composé ainsi qu'une quantité d'atomes d'hydrogène entre 30 % et 50 % d'une quantité totale d'atomes du composé, ou de carbones tétraédriques amorphes (connu sous l'acronyme « ta-C »), présentant un nombre de liaisons sp3 entre 80 % et 88 % d'un nombre de liaisons totales du composé et une quantité nulle d'atomes d'hydrogène. Par ailleurs, les appellations sp2 et sp3 sont à comprendre tel qu'elles sont définies dans la modélisation des orbitales hybrides en chimie quantique et ne seront pas davantage détaillées car elles sont connues. En l'espèce, la couche 33 présente en outre des propriétés antistatique ou anti-collage de l'aluminium qui vont encore réduire un collage de morceaux de pièces 21, 22 sur la face 30 (figure 10c) et ainsi améliorer encore davantage la durée de vie de l'outil 1. En variante, la couche 33 peut être composite, par exemple en comprenant une première strate en carbone adamantin et une deuxième strate en nitrure de chrome (CrN). Ainsi, en plus de bénéficier des propriétés antistatique ou anti-collage, le nitrure de chrome améliore la durée de vie de la couche 33.

Dans le cas où l'épaulement 3 comprend plusieurs faces, notamment plusieurs faces non coplanaires 30, 31, 32, toutes les faces peuvent porter une couche 33, ou sélectivement certaines faces ou une seule face. Les couches 33 peuvent indépendamment l'une de l'autre, ou indépendamment un groupe de couches 33 par rapport à un autre groupe de couches présenter les caractéristiques précitées de coefficient de friction, de dureté, de température, et les propriétés anti-collage prises seules ou en combinaison.

Une totalité des faces 30, 31, 32 peut porter la couche 33.

Selon un exemple de réalisation, notamment illustré à la figure 3a, la couche 33 recouvre toute la face 30 de sorte que cette dernière est en contact avec les pièces 21, 22 seulement par l'intermédiaire de la couche 33. En variante à la figure 3b, une fraction des faces 30, 31, 32 peut porter la couche 33. Selon un exemple de réalisation, notamment illustré à la figure 3b, une fraction de chaque face oblique 31, 32 porte une couche 33.

Afin d'obtenir un effort axial de contact de l'épaulement 3 sur les pièces 21, 22 inférieur à 2 000 N, un rapport entre un diamètre, de préférence un diamètre minimal, de l'épaulement 3 et un diamètre du pion 2 peut être inférieur ou égal à 1,5, de préférence inférieur ou égal à 1,3. Ainsi, le colmatage du matériau soudé sur la face 30 ainsi que les contraintes mécaniques subies par l'outil 1 sont réduites et donc la durée de vie de l'outil 1 est encore améliorée. Les pièces 21, 22 subiront moins de contraintes de soudage et donc moins de déformations géométriques après soudage. En outre, réduire l'effort axial permet à l'outil 1 de subir moins de contraintes mécaniques. L'outil 1 est donc également plus précis lors du soudage.

Un mode de mise en oeuvre d'un procédé de traitement de l'épaulement 3 est décrit en référence à la figure 11. Au cours d'une étape E10, la face 30 est rectifiée. On peut notamment voir la face 30 rectifiée à titre d'exemple en figure 10b. On parle également de polissage de la face.

Les méthodes de finition connues dans l'état de la technique, par exemple par usinage conventionnel, permettent d'obtenir un coefficient rugosité entre 1,6 et 3,2, tandis que l'étape E10 de rectification permet d'obtenir un indice de rugosité inférieur ou égal à 0,8, par exemple inférieur ou égal à 0,4, de préférence inférieur ou égal à 0,01. Sa mise en oeuvre permet donc de réduire considérablement l'indice de rugosité, au minimum en le divisant par deux, généralement par huit, jusqu'à le diviser au-delà de trois-cents. En outre, la rectification permet de supprimer les marques de fraises ou outils de coupe d'usinage conventionnel et de n'avoir aucun bossage ou stries d'usinage sur la face 30.

Puis, au cours d'une étape E11, la face d'extrémité plane 30 de l'épaulement est nitrurée. Selon un exemple de réalisation, la nitruration s'étend sur une portion de la face 3 comprenant la face d'extrémité 30. Puis, au cours d'une étape E12, la face est revêtue par la couche 33. Dans le cas où la face 3 comprend plusieurs faces, notamment plusieurs faces 30, 31, 32 non coplanaires, les étapes E10 à E12 peuvent être mises en oeuvre sur toutes les faces, ou sélectivement certaines faces ou une seule face.

Dans le présent exposé, on entend par nitruration de la face 30 un traitement thermochimique formant des nitrures au sein de la face 30, par exemple des nitrures de fer dans le cas d'un acier, le long de la portion.

La portion s'étend à partir de la face 30 le long de l'axe longitudinal Z sur plusieurs dixièmes de millimètres, typiquement 0,3 mm voire 0,5 mm.

La nitruration E11 peut comprendre une diffusion d'atomes d'azote dans la face 30.

La nitruration E11 peut comprendre en outre une diffusion d'atomes de carbone dans la face 30. On parle alors de « carbonitruration ».

La portion obtenue suite à la nitruration E11 comprend notamment une couche de diffusion. La couche de diffusion présente une dureté en échelle Vickers supérieure ou égale à 350 HV, par exemple 1400 HV et, en échelle Rockwell, supérieure ou égale à 55 HRC, par exemple 69 HRC, voire 71 HRC. Ainsi, l'épaulement 3 présente un gradient de dureté entre un point de l'épaulement 3 extérieur à la portion dont la dureté en échelle Rockwell est inférieure à 55 HRC, typiquement 52 HRC, voire 54 HRC, et un point appartenant à la portion. Une adhérence de la couche 33 sur la face 30 est donc améliorée, ce qui a pour effet d'améliorer la durée de vie de la couche 33.

Une mesure de la dureté exprimée en HRC, appelée dureté Rockwell, peut être mise en oeuvre de façon connue par une personne du métier, typiquement au moyen d'une mesure optique d'une trace laissée par un pénétrateur normalisé formé d'une bille en acier trempé et polie, et ne sera pas détaillée davantage dans le présent exposé.

La portion obtenue comprend en outre une couche de combinaison. La couche de combinaison peut par exemple comprendre deux phases différentes de nitrures de fer. Afin d'améliorer encore davantage l'adhérence de la couche 33 sur la face 30 et donc la durée de vie de la couche 33, on peut prévoir une étape d'élimination, par exemple par usinage, de la couche de combinaison préalablement au revêtement E12 de la face 30.

Dans une variante, la nitruration E12 peut être précédée d'une trempe.

Dans une variante, la nitruration E12 peut être précédée d'une trempe et d'un revenu.

Un mode de mise en oeuvre d'un procédé de soudage d'une première pièce 21 et d'une deuxième pièce 22 d'un ensemble 20 est décrit en référence à la figure 12.

Le procédé de soudage est mis en oeuvre par l'outil 1 du présent exposé.

Dans le cas d'un outillage 200 amovible, l'outillage 200 est fixé sur une table 300 au cours d'une étape E20. Selon un exemple de mise en oeuvre de l'étape E20, l'outillage 200 est mis et maintenu en position sur la table 300, typiquement par des vis. Alternativement, l'outillage fait partie de la table 300. L'outillage 200 est alors déjà monté sur la table 300.

Au cours d'une étape E21, les pièces 21, 22 à souder sont mises en position dans l'outillage 200 puis maintenues en position par des moyens de fixation, par exemple des brides de serrage mises en place dans l'outillage 200. Les pièces 21, 22 peuvent être mises en position selon différentes configurations :
- en juxtaposition champ contre champ (figure 13a), les pièces 21, 22 ayant alors des faces principales coplanaires 210, 220 ;
- superposées l'une sur l'autre parallèlement (figure 13b), l'une des pièces 21 s'étendant alors au-dessus de l'autre pièce 22. La face principale inférieure 211 de la pièce supérieure 21 est en contact surfacique avec la face principale supérieure 220 de la pièce inférieure 22 ; ou
- superposées l'une sur l'autre angulairement, par exemple perpendiculairement ou en présentant un angle inférieur à 90° tel que 70° , ou encore face contre champ (figures 13c, 13d et 13e), l'une des pièces 21 s'étendant au-dessus de l'autre pièce 22, la face principale inférieure 211 de la pièce supérieure 21 étant en contact surfacique avec un champ 222 de la pièce inférieure 22 (figure 13c) ou bien un champ 212 de la pièce supérieure 21 étant en contact avec la face principale supérieure 220 de la pièce inférieure 22 (figure 13d et 13e). Les faces principales 220, 221 de cette dernière sont perpendiculaires à celles de la pièce supérieure 21.

Au cours d'une étape E22, l'outil 1 est déplacé en translation verticale jusqu'à mettre en contact la face d'extrémité 30 avec au moins l'une des première et deuxième pièces 21, 22.

En juxtaposition, la face d'extrémité 30 est en contact avec les deux pièces 21, 22 simultanément. En superposition, l'outil 1 peut être en contact avec l'une des pièces 21, 22 ou les deux. Selon un exemple de réalisation, notamment illustré en figure 13b, les pièces sont superposées l'une sur l'autre parallèlement et la face d'extrémité 30 est en contact avec la face principale supérieure 210 de la pièce supérieure 21.

Selon un autre exemple de réalisation, notamment illustré en figure 13c, l'une des pièces 21 s'étend perpendiculairement au-dessus de l'autre pièce 22, la face principale inférieure 211 de la pièce supérieure 21 étant en contact surfacique avec un champ 222 de la pièce inférieure 22. Ainsi, la face d'extrémité 30 est en contact avec la face principale supérieure 210 de la pièce supérieure 21.

En variante, notamment illustrée aux figures 13d et 13e, la pièce supérieure 21 présente une portion principale plane 213, ayant des faces principales s'étendent parallèlement, et une bordure évasée 214 dans laquelle les faces principales s'éloignent à mesure qu'on se rapproche du champ. Ce champ 212 de la pièce supérieure 21 est en contact avec la face principale supérieure 220 de la pièce inférieure 22. Ainsi :
- la face d'extrémité axiale 30 et la première face oblique 31 de l'épaulement 3 sont respectivement en contact avec la bordure 214 et une face plane de la partie principale 213 de la pièce supérieure 21 ; et
- la deuxième face oblique 32 de l'épaulement 3 est en contact avec la face principale supérieure de la pièce inférieure 22.

L'outil 1 est prêt à souder. Au cours d'une étape E23, le pion 2 est mis en rotation et l'outil 1 est déplacé dans une direction de l'espace, typiquement horizontale, pour suivre une ligne de joint de sorte à réaliser une passe et former la soudure 23 des première et deuxième pièces 21, 22. Plusieurs passes peuvent être réalisées pour former la soudure 23, typiquement deux passes.

En juxtaposition, dont un exemple est notamment illustré en figure 13a, la face d'extrémité 30 passe simultanément sur les faces principales coplanaires 210, 220 des pièces 21, 22.

Dans le cas où les pièces 21, 22 sont superposées l'une sur l'autre parallèlement, dont un exemple est notamment illustré en figure 13b, la face d'extrémité 30 passe sur la face principale externe 210 de la pièce supérieure 21 et soude les deux pièces l'une à l'autre.

Dans le cas où l'une des pièces 21 s'étend angulairement au-dessus de l'autre pièce 22, par exemple perpendiculairement dans un exemple illustré en figure 13c ou en présentant un angle inférieur à 90° tel que 70° , la face principale inférieure 211 de la pièce supérieure 21 étant contact surfacique avec un champ 222 de la pièce inférieure 22, la face d'extrémité 30 passe sur la face principale supérieure 210 de la pièce supérieure. En variante, notamment illustrée à titre d'exemple aux figures 13d, le champ 212 de la pièce supérieure 21 peut être en contact avec la face principale supérieure 220 de la pièce inférieure 22, la face d'extrémité 30 passe sur la face principale 214 de la pièce supérieure 21 et les faces obliques 31, 32 passent respectivement sur la face principale 213 de la pièce supérieure 21 et la face principale supérieure 220 de la pièce inférieure 22.

Les pièces 21, 22 sont alors soudées. Les étapes E20 à E23 peuvent être répétées jusqu'à que l'ensemble 20 soit entièrement soudé. Par conséquent, l'ensemble 20 comprend alors au moins deux pièces.

L'apport de lubrification complémentaire sur les pièces 21, 22 permet de réduire l'effort de trainée. Le glissement de la face d'extrémité 30 est alors encore amélioré. En effet, comme illustré à titre d'exemple à la figure 14 illustrant une évolution de l'effort de traînée subi par l'outil 1 avec et sans apport de lubrification en fonction du temps, l'effort pouvant être exprimé en Newton et le temps en secondes, cet effort passe en dessous de 1000 N en module avec l'apport de lubrification pour la réalisation de la soudure 23. Il peut alors être prévu que les pièces 21, 22 soient lubrifiées au cours de l'étape E23. L'outil 1 peut alors comprendre des moyens de lubrification.

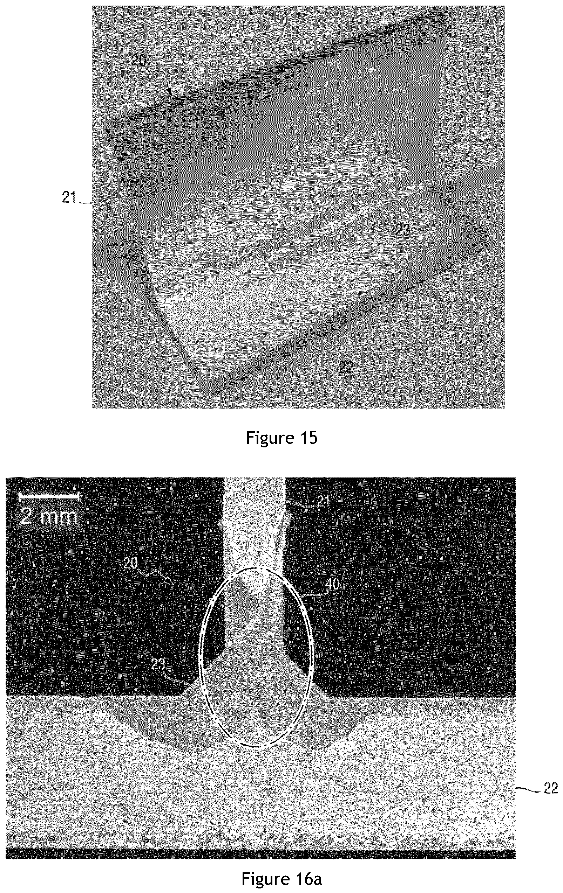

L'ensemble 20 résultant du procédé de soudage mis en oeuvre par l'outil 1 du présent exposé se distingue macroscopiquement par une soudure 23 présentant une réduction, voire une suppression, des flash de soudure 24, des stries de soudage 25, des fissures 27 et des manquements de matière 29. En outre, la soudure 23 ne présente pas d'effondrement de soudure 26. En effet, la soudure 23 obtenue par l'outil 1 du présent exposé illustrée à titre d'exemple en figures 8 et 15 ne présente pas de flash de soudure 24, de stries de soudage 25, de fissures 27, de manquements de matière 29 et d'effondrement de soudure 26 tandis qu'une soudure 23 obtenue par un outil connu de l'art antérieur et notamment illustrée en figures 5a, 5b, 5c, 6, 7a et 7b présente des fissures 27, du flash de soudure 24, des stries de soudage 25, de manquements de matière 29 et d'effondrement de soudure 26.

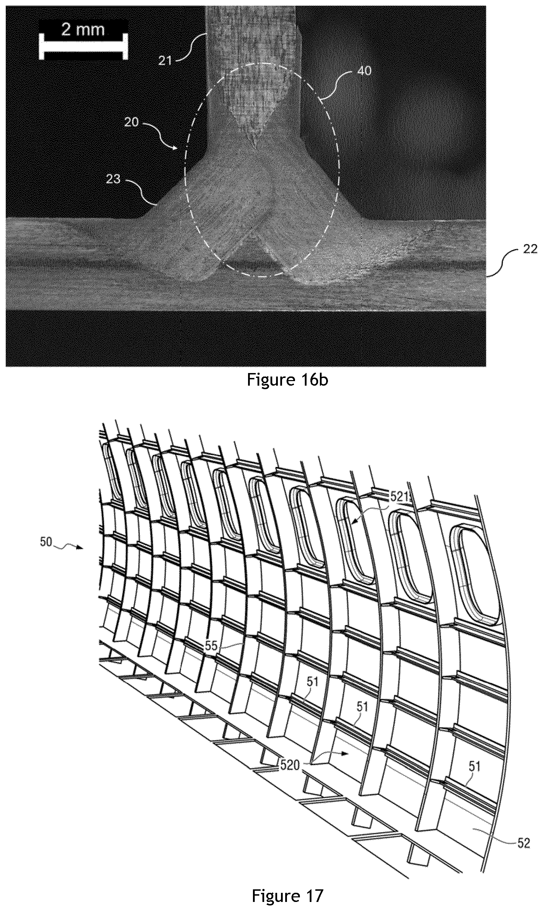

L'ensemble 20 résultant du procédé mis en oeuvre par l'outil 1 du présent exposé se distingue en outre microscopiquement par une zone de recouvrement 40, illustrée notamment à titre d'exemple aux figures 16a et 16b.

On a illustré à la figure 17 un fuselage d'aéronef. Il comprend des lisses 51 s'étendant suivant une direction longitudinale du fuselage, des cadres 55 s'étendant dans une direction transversale du fuselage, et une peau 52 recouvrant les lisses 51 et cadres 55. Les cadres 55 et lisses 51 agissent ici comme des raidisseurs de la peau 52 du fuselage.

Dans ce qui suit, le présent exposé sera détaillé pour les cadres 55 et s'applique mutatis mutandis aux lisses 51.

À des fins de concision, cadres 55 et lisses 51 seront nommés raidisseurs dans la suite de cette description
Les raidisseurs s'étendent donc sur une face interne 520 de la peau 52, une face externe 521 de la peau 52 étant libre et opposée aux raidisseurs. La peau et chaque raidisseur sont soudés l'un à l'autre par le procédé de soudage mis en oeuvre par l'outil 1. Il n'est donc pas nécessaire de les fixer l'un à l'autre au moyen d'un assemblage par des organes de fixation rapportés. Ainsi, une masse de l'aéronef 50 est réduite et le rendement de l'aéronef 50 est amélioré. L'aéronef 50 est également assemblé plus rapidement.

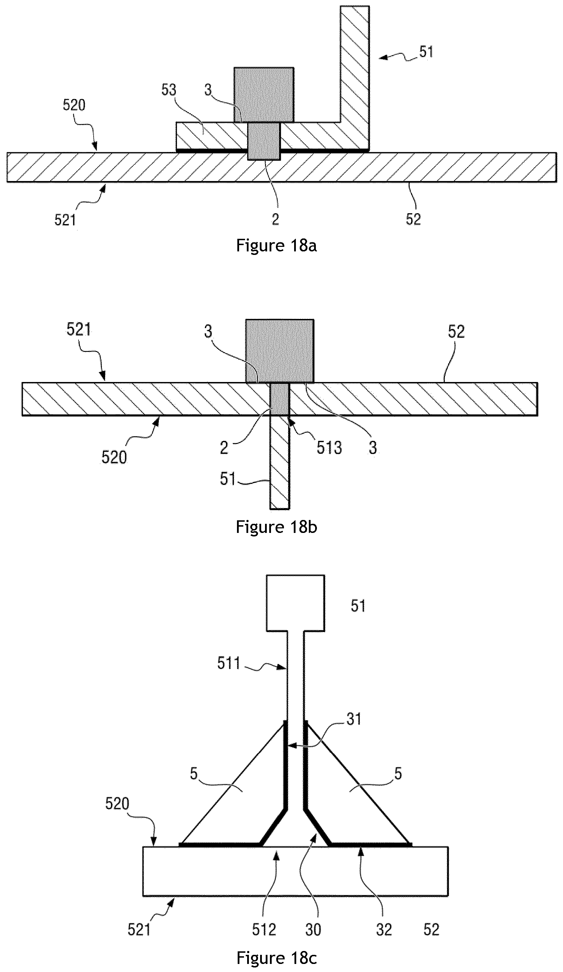

Selon un premier exemple de réalisation, notamment illustré en figure 18a, le raidisseur a une forme profilée en coin et comprend une semelle 53, la semelle 53 étant soudée en superposition sur la peau de fuselage 52. Le soudage a lieu avec la face d'extrémité axiale 30 en contact avec la semelle 53, du côté du raidisseur 51 opposé à la peau 52.

Selon un deuxième exemple de réalisation, notamment illustré en figure 18b, le raidisseur 51 est soudé en superposition sur la peau de fuselage 52 et l'outil est cette fois en contact avec la peau de fuselage 52 lors du soudage, en s'étendant sur la face externe 521 de la peau, opposée au raidisseur 51. Un champ du raidisseur 513 est en contact avec la face interne de la peau 52.

Selon un troisième exemple de réalisation, notamment illustré en figure 18c, le raidisseur 51 est soudé en superposition sur la peau de fuselage 52 et l'outil est en contact à la fois avec la peau de fuselage 52 et le raidisseur 51 lors du soudage. Le soudage a lieu depuis la face interne et non visible 520 de la peau représentant un avantage considérable par rapport à la configuration de la figure 18b. Le soudage a lieu dans la configuration des figures 13d et 13e. Les faces obliques 31, 32 de la l'épaulement3 viennent en contact avec à la fois la face principale du raidisseur 511 et la face principale interne 520 de la peau 52 et la face d'extrémité 30 de la face 3 est en contact avec la portion 512 du raidisseur 51. L'outil 1 réalise donc la soudure en passant simultanément sur les portions planes 511, 512 du raidisseur 51 ainsi que la face interne 520 de la peau 52, par exemple à gauche sur la figure 18c. Une autre passe permet de faire de même à droite. La soudure étant réalisée du côté interne de l'aéronef, une étape de finition, par exemple par usinage ou meulage de la soudure 23, est alors supprimée. Il n'y a plus non plus besoin de semelle 53, ce qui réduit le poids de l'ensemble. De plus, l'étanchéité de l'aéronef 50 est améliorée car il n'y a plus d'interface résiduelle restante avec un recouvrement 40 entre les deux passes illustré à titre d'exemple en figure 16. Le soudage est également plus robuste grâce à la zone de recouvrement 40 et il n'y a plus de manque de brassage de l'interface.

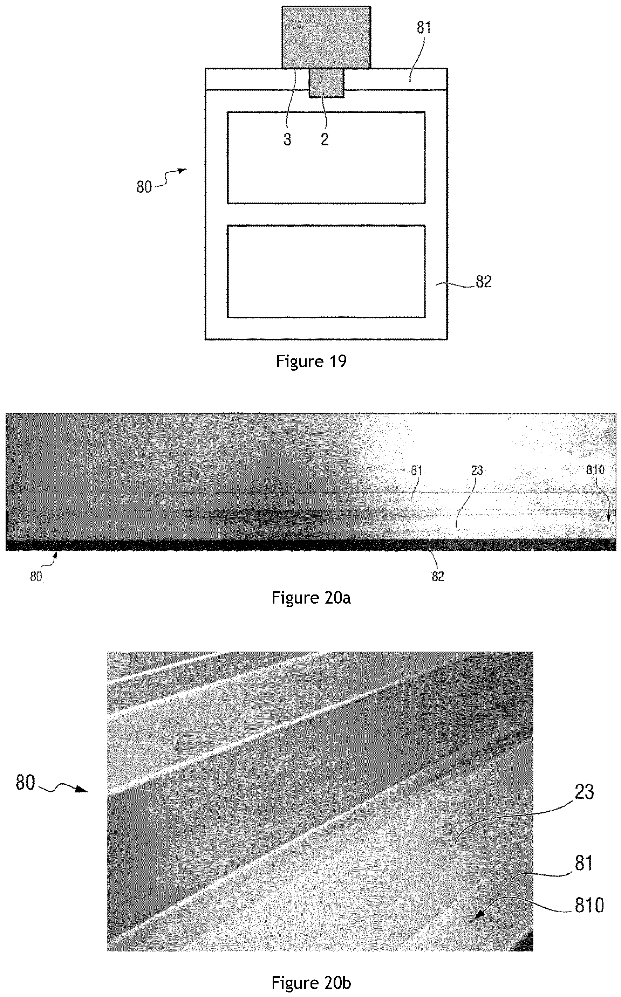

Le procédé de soudage mis en oeuvre par l'outil 1 du présent exposé permet également d'obtenir un ensemble 80 présentant une structure soudée creuse et illustrée à la figure 19. Cette architecture est typique des bacs à batteries en aluminium utilisés dans les véhicules électriques et consistant à souder un élément de peau 81 sur un profilé en aluminium creux 82. Le profilé creux 82 permet de gagner en poids afin d'améliorer le rendement poids/puissance du véhicule électrique et de consommer moins d'énergie. Cela n'est pas possible avec l'outil connu de l'art antérieur avec lequel un effondrement de soudure 26 se produit, comme illustré à titre d'exemple à la figure 5c.

Selon un exemple de réalisation, notamment illustré aux figures 20a et 20b, l'élément de peau 81 et le profilé aluminium creux 82 sont posés l'un sur l'autre parallèlement, l'élément de peau 81 s'étendant alors au-dessus du profilé 82. La soudure 23 de la peau 81 avec le profil est alors obtenue par un passage de l'outil sur une face principale supérieure 810 de la peau 81 opposée au profilé aluminium creux 82.

## Revendications

1. Outil (1) de soudage par friction-malaxage,
l'outil (1) comprenant :
- un pion externe tournant (2) ; et
- un corps (5) présentant un épaulement entourant le pion (2),
l'épaulement (3) comprenant au moins une face (30) configurée pour être en contact avec des pièces (21, 22) à souder,
une moyenne arithmétique de rugosité de la face (30) étant inférieure ou égale à 0,8.

2. Outil (1) selon la revendication 1, dans lequel la moyenne arithmétique de rugosité est inférieure ou égale à 0,01.

3. Outil (1) selon la revendication 1 ou 2, dans lequel la face (30) porte une couche (33) de revêtement présentant un coefficient de friction inférieur ou égal à 0,8.

4. Outil (1) selon l'une des revendications 1 à 3, dans lequel la face (30) porte une couche (33) de revêtement présentant une dureté supérieure ou égale à 1000 HV.

5. Outil (1) selon l'une des revendications 3 ou 4, dans lequel une tenue maximale en température de la couche (33) de revêtement est supérieure ou égale à 200°C.

6. Outil (1) selon l'une des revendications 3 à 5, dans laquelle la couche (33) de revêtement est en carbone adamantin.

7. Outil (1) selon l'une des revendications 1 à 6, dans lequel la face (30) est nitrurée.

8. Outil (1) selon l'une des revendications 1 à 7, dans lequel l'épaulement (3) est statique et le pion est monté mobile en rotation par rapport à l'épaulement (3).

9. Outil (1) selon l'une des revendications 1 à 8, dans lequel un rapport entre un diamètre (D2) de la face (3) et un diamètre (D1) du pion (2) est inférieur ou égal à 1,5.

10. Outil (1) selon l'une des revendications 1 à 9, comprenant en outre des moyens de lubrification de la face (3).

11. Outil (1) selon l'une des revendications 1 à 10, dans lequel l'épaulement (3) présente plusieurs faces non coplanaires (30, 31, 32) présentant chacune une moyenne arithmétique de rugosité inférieure ou égale à 0,8.

12. Outil selon la revendication 11, dans lequel l'épaulement (3) présente plusieurs faces non coplanaires (30, 31, 32) présentant chacune une moyenne arithmétique de rugosité inférieure ou égale à 0,01.

13. Procédé de traitement d'un épaulement (3) d'un outil (1) de soudage par friction-malaxage,
l'épaulement (3) comprenant au moins une face (30) configurée pour être en contact avec des pièces à souder,
le procédé comprenant une rectification (E10) de la face (30).

14. Procédé selon la revendication 13, dans lequel la rectification (E10) est mise en oeuvre de sorte qu'une moyenne arithmétique de rugosité de la face (30) est inférieure ou égale à 0,8, de préférence inférieure ou égale 0,01.

15. Procédé selon l'une des revendications 13 ou 14, comprenant en outre une étape de revêtement (E12) de la face (30) après la rectification (E10).

16. Procédé selon la revendication 15, comprenant en outre une étape de nitruration (E11) de la face (30) avant le revêtement (E12).

17. Procédé de soudage de pièces, le procédé étant mis en oeuvre par un outil (1) conforme à l'une des revendications 1 à 12.

18. Procédé selon la revendication 17, appliqué à des pièces (21, 22) juxtaposées champ contre champ.

19. Procédé selon la revendication 17, appliqué à des pièces (21, 22) superposées l'une sur l'autre.

20. Procédé de soudage d'une première pièce (21) et d'une deuxième pièce (22),
le procédé étant mis en oeuvre par un outil (1) conforme à l'une des revendications 11 ou 12, et de sorte que :
- une première (30) des faces et une deuxième des faces (31) de l'épaulement (3) sont en contact avec la première pièce (21) ; et
- une troisième (32) des faces de l'épaulement (3) est en contact avec la deuxième pièce (22),
les première et deuxième pièces (21, 22) étant inclinées l'une par rapport à l'autre, en étant par exemple perpendiculaires l'une à l'autre.

21. Ensemble (20) comprenant des pièces (21, 22) soudées résultant de la mise en oeuvre d'un procédé selon l'une des revendications 17 à 20.

22. Bac de batteries (80) comprenant au moins une peau (81) et au moins un profilé (82) creux,
une soudure de la peau (81) au profilé (82) résultant d'une mise en oeuvre d'un procédé selon l'une des revendications 17 à 20.

23. Aéronef (50) comprenant une peau (52) de fuselage et au moins un raidisseur (51),
une soudure du raidisseur (51) à la peau (52) de fuselage résultant d'une mise en oeuvre d'un procédé selon la revendication 20.
